# EUROPÄISCHE PATENTSCHRIFT

(11) **EP 1 688 289 B1**
(45) Veröffentlichungstag und Bekanntmachung des Hinweises auf die Patenterteilung: **20.11.2013**
(21) Anmeldenummer: 06001689.6
(22) Anmeldetag: 27.01.2006
(51) Int. Cl.: B60J 7/14, B60J 7/057

(54) **Anordnung zum Schwenken der Teile eines Fahrzeugverdecks**
Device for the rotation of a part of a vehicle roof
Dispositif pour le pivotement d'une partie d'un toit de véhicule

(30) Priorität: 02.02.2005 DE 102005005237
(43) Veröffentlichungstag der Anmeldung: 09.08.2006
(73) Patentinhaber: Rausch und Pausch GmbH, 95100 Selb (DE)
(72) Erfinder: Wagner, Tobias, 21149 Hamburg (DE)
(74) Vertreter: Bock, Gerhard

(56) Entgegenhaltungen:
- EP-A- 0 844 125
- DE-A1- 10 158 938
- DE-A1- 10 216 417
- DE-A1- 10 313 496
- US-A- 5 785 375

## Beschreibung

Die Erfindung betrifft eine Anordnung zum Schwenken der Teile eines Fahrzeugverdecks, das aus mindestens zwei kinematisch miteinander verbundenen Teilen besteht, gemäß der Gattung der Patentansprüche und ist insbesondere zwei- und dreiteilige sog. Hard Tops von Cabriolet-Fahrzeugen bestimmt.

Es sind so genannte Retractable Hard Top Cabriolets bekannt, welche für die Schwenkbewegung des hinteren Dachteils genau in dem Bereich einen relativ großen Raum einnehmen, in dem sich besonders bei nach dem Plattformprinzip hergestellten Fahrzeugen Fahrwerksteile und/oder Tankeinfüllstutzen befinden. Dadurch sind bei Anwendung der Cabrio-Variante bei Fahrzeugen, die nach dem Plattformprinzip aufgebaut sind, erhebliche und kostspielige Änderungen an der Bodengruppe erforderlich. Darüber hinaus ist der für die Dachbewegung erforderliche große Freiraum nicht in deren Endlagen, also zeitlich verhältnismäßig wenig genutzt. Es ist bereits eine Lösung bekannt, die den wenig genutzten Raum durch Einsatz einer Mechanik umgeht, die das hintere Dachteil zunächst um einen sehr hoch liegenden Drehpunkt schwenkt, bevor es um einen weiter vom liegenden Drehpunkt in die abgelegte Position bewegt wird. Für die ablegende Bewegung ist ein zweiter Antrieb notwendig.
In der DE 101 63 727 B4 ist eine Schwenkbewegung der Dachteile in zwei Schritten beschrieben, bei welcher ein antreibender Zylinder mit einem seiner Anlenk- bzw. Drehpunkte an der Karosserie befestigt ist und dadurch eine relativ große Länge benötigt. Außerdem ist diese Lösung in der Wahl der Antriebsmittel beschränkt. Bspw. ist die Verwendung eines Schwenkmotors nicht oder nur mit erheblichen Anpassungsmaßnahmen möglich.
Aus der EP 1 160 113 A2 ist eine Betätigungsanordnung für schwenkbare Teile von Fahrzeugverdecken bekannt, bei der ein Drehantrieb in die karosseriefesten Hauptlager der Schwenkteile integriert ist, so dass ein Verdeckspriegel oder Verdeckdeckel von der Welle des Drehantriebs bewegt wird. Diese für einfache Cabriolet-Formen geeignete Lösung ist auf Retractable Hard Tops kaum anwendbar und darüber hinaus mit erheblichen Aufwendungen bei der Montage und bei Reparaturen verbunden.

Ferner ist aus der DE 885 356 ein Klappverdeck für Kraftfahrzeuge bekannt, bei dem sich ein Antriebsmotor im Gelenk zwischen Dach- und Heckrahmen befindet. In einem abgeschlossenen Bewegungsablauf nimmt der Antriebsmotor an allen Bewegungen der Verdeckelemente teil. Dadurch ist der erforderliche Bewegungsfreiraum für die Verdeckelemente und ihre Antriebsmittel relativ groß. Außerdem sind die Energiezuleitungen zum Antriebsmotor aufwändig und erheblichen Beanspruchungen unterworfen.

Die US 5,785,375 offenbart den Oberbegriff des Anspruchs 1.

Der Erfindung liegt daher die Aufgabe zu Grunde, eine Schwenkanordnung für die Teile eines Fahrzeugverdecks, insbesondere für ein Retractable Hard Top zu schaffen, die deutlich weniger Bewegungsraum in kritischen Bereichen eines Fahrzeugs benötigt. Sie soll einen zusätzlichen Antrieb ebenso überflüssig machen wie nicht auf eine bestimmte Antriebsart beschränkt sein.

Gemäß der Erfindung wird diese Aufgabe durch die kennzeichnenden Merkmale des ersten Patentanspruchs gelöst und durch die Merkmale der Unteransprüche vorteilhaft ausgestaltet. Wesentlich für die Erfindung ist, dass die Antriebseinheit (der Antriebszylinder oder der Schwenkmotor) nicht direkt, sondern über ein Zwischenlager an der Karosserie befestigt ist. Dieses Zwischenlager ist seinerseits an der Karosserie schwenkbar befestigt, und zwar in einer Ebene, die im Wesentlichen parallel zur Fahrzeugachse gerichtet ist. Mit dem Zwischenlager ist ein hinteres Dachteil gelenkig verbunden, wobei sich beide um eine Drehachse bewegen können, die im Wesentlichen rechtwinklig zur vorstehend genannten Ebene gerichtet ist. Das hintere Dachteil ist mit einem Führungsstück (einem Führungsbolzen oder einer Führungsrolle) versehen, das mit einem an der Karosserie (am Hauptlager) befestigten Steueranschlag (bspw. ein Fangmaul) zusammenwirkt. Außerdem besteht eine geeignete elastische Kraftverbindung zwischen der Seite des Zwischenlagers, die dem Führungsstück gegenüber liegt, und dem Hauptlager. Die elastische Kraftverbindung kann in Form einer Feder (Druck-, Zug-, Torsions-oder Gummifeder) gestaltet sein. Durch diese grundsätzliche Anordnung ist ein zweistufiger bzw. zweigeteilter Bewegungsablauf zur Überführung der Dachteile aus der Schließposition in die Ablageposition und umgekehrt mit Hilfe nur eines Antriebs, der unterschiedlich gestaltet sein kann, möglich. In einer Stufe werden zwar die Dachteile bewegt, jedoch die Lage der Antriebseinheit wird nicht verändert. In der anderen Stufe wird die Antriebseinheit mit den Dachteilen bewegt, solange nämlich das Führungsstück den Steueranschlag berührt. Welche Stufe zuerst realisiert wird, hängt davon ab, ob das Verdeck geöffnet oder geschlossen wird.
Die Anordnung ist so getroffen, dass sich das hintere Dachteil um zwei Schwenkachsen dreht. Auf diese Weise entspricht der beanspruchte Schwenkraum unterhalb der sog. C-Säule sehr genau dem Raumbedarf des abgelegten Daches, es wird kein darüber hinaus gehender Freiraum für die Bewegung benötigt. Die mechanische Konstruktion erlaubt nahezu beliebige Schwenkwinkel für die hinteren Dachteile und ist nicht an bestimmte Antriebselemente gebunden. Als solche sind Hydraulikzylinder ebenso einsetzbar wie bspw. Schwenkmotoren oder Elektromotoren, ggf. mit Übersetzungsgetrieben. Eine übliche Beladehilfsposition des schwenkbaren Dachsystems ist vorteilhaft und ohne Mehraufwand möglich.

Die Erfindung wird nachstehend an Hand der schematischen Zeichnung dreier Ausführungsbeispiele erläutert, die in jeweils fünf unterschiedlichen Funktionslagen als Aufrissdarstellungen gezeigt sind. Im Einzelnen zeigen:
- Fig. 1: den zur Erläuterung einer ersten erfindungsgemäßen Anordnung wesentlichen Teil eines Cabriolet-Fahrzeugs, wobei sich das Dach in Schließposition befindet,
- Figuren 2 - 5: die verschiedenen aufeinander folgenden Positionen der einzelnen Teile der erfindungsgemäßen Anordnung gemäß Fig. 1 bis hin zur Ablageposition,
- Figuren 6 - 10: eine zweite erfindungsgemäße Anordnung in ihren den Figuren 1 - 5 entsprechenden Positionen,
- Figuren 11 - 15: eine dritte erfindungsgemäße Anordnung in ihren den Figuren 6 - 10 entsprechenden Positionen
- Fig. 16: ein Diagramm zum Bewegungsablauf der vorgenannten Anordnungen.

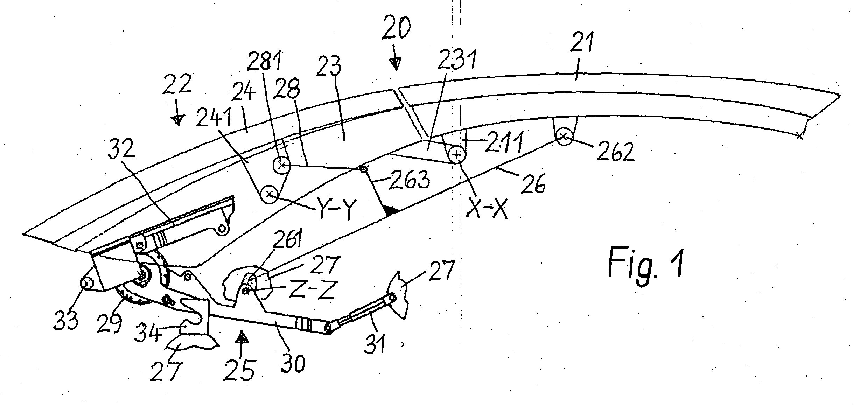

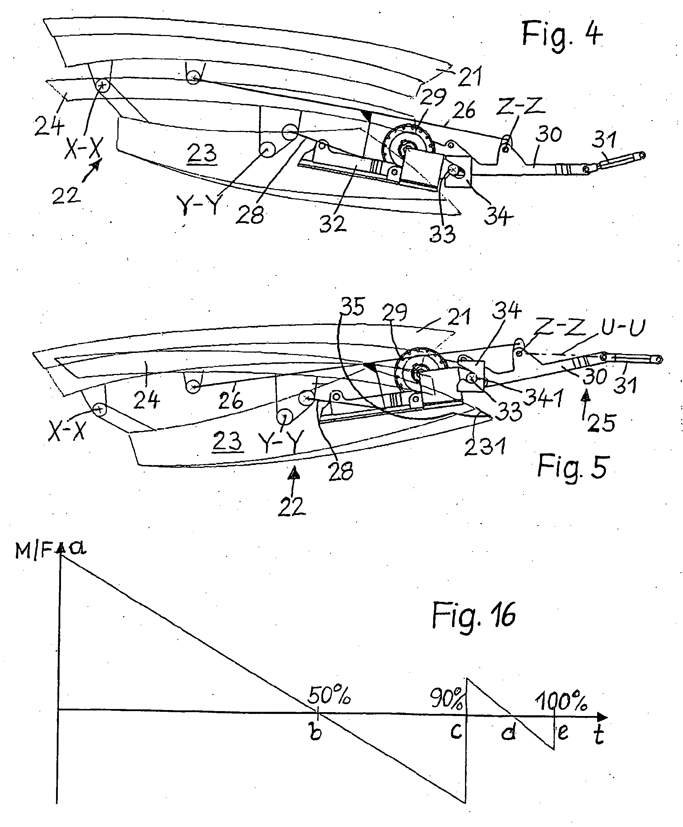

In Fig. 1 sind die schwenkbaren Teile eines Cabrio-Verdecks 20 dargestellt, und zwar ein vorderes Teil 21 und ein hinteres Teil 22, das seinerseits aus einer sog. C-Säule 23 und einer Heckscheibe 24 besteht. Das vordere Teil 21 und die C-Säule 23 des hinteren Teils 22 sind miteinander verbunden und haben eine gemeinsame, rechtwinklig zur Zeichenebene gerichtete Drehachse X-X, zu der sie mit Lagerböcken 211, 231 unterschiedliche Schwenkbewegungen durchführen. Ebenso sind C-Säule 23 und Heckscheibe 24 miteinander verbunden und um eine gemeinsame Drehachse Y-Y unterschiedlich schwenkbar. Wie die gesamte erfindungsgemäße Anordnung 25 befinden sich die zueinander zumindest angenähert parallelen Drehachsen X-X und Y-Y zu beiden Seiten des im übrigen nicht dargestellten Fahrzeugs und sind im Wesentlichen parallel zur Zeichenebene definiert beweglich.
Mittels eines Hauptlenkers 26 ist das Teil 21 an die Karosserie (das Hauptlager) 27 des Fahrzeugs angelenkt. An den Hauptlenker 26 ist über einen Ausleger 263 definiert ein Steuerlenker 28 angelenkt, der die Schwenkungen zwischen der C-Säule 23 und der Heckscheibe 24 zwangsläufig erzeugt und so die Heckscheibe 24 parallel zum vorderen Teil 21 ablegt, siehe Fig. 5. Der Gewährleistung der zwangsläufigen Schwenkungen dient auch eine an der Heckscheibe 24 angebrachte Lasche 241, an die der Steuerlenker 28 in einem Punkt 281 in einer festen Beziehung zur Achse Y-Y angelenkt ist und die als Schwenklager dient.
Der Initiierung der Schwenkbewegungen der Teile 21, 23, 24 dient ein Schwenkmotor 29, der seinerseits auf einem Zwischenlager 30 befestigt ist, das um eine zu den Achsen X-X und Y-Y parallele Achse Z-Z an der Karosserie (Hauptlager) 27 schwenkbar gelagert ist. Die Achse Z-Z liegt in der Nähe und unterhalb des Anlenkpunktes 261 des Hauptlenkers 26 am Zwischenlager 30. Der Anlenkpunkt des Hauptlenkers 26 am vorderen Dachteil 21 ist mit 262 bezeichnet. Abweichend von diesem Ausführungsbeispiel kann der Anlenkpunkt 261 des Hauptlenkers 26 sich auch an der Karosserie 27 befinden. Im vorliegenden Ausführungsbeispiel der Fig. 1 ist das Zwischenlager 30 als zweiarmiger Hebel gestaltet an dessen einem Ende der Schwenkmotor 29 angeordnet und an dessen anderem Ende eine kraftelastische Verbindung, bspw. einer Feder, 31 zum Hauptlager 27 besteht. Mit dem Gehäuse des Motors 29, das gegenüber einer festen Welle drehbar gestaltet ist, ist ein Arm 32 starr verbunden, an dem die C-Säule 23 befestigt ist. Andererseits ist an den Arm 32 ein Führungsbolzen 33 angeflanscht, der in bestimmten im Folgenden beschriebenen Bewegungspositionen mit einem steuernden Anschlag (Fangmaul) 34 zusammenwirkt.
In Fig. 1 befindet sich das Dach 20 in der Schließposition, die für diese Betrachtungen die Ausgangslage sein soll. Soll das Dach geöffnet werden, so wird der Motor 29 vorliegend entgegen dem Uhrzeigersinn in Drehungen versetzt, es wirkt ein maximales Drehmoment.

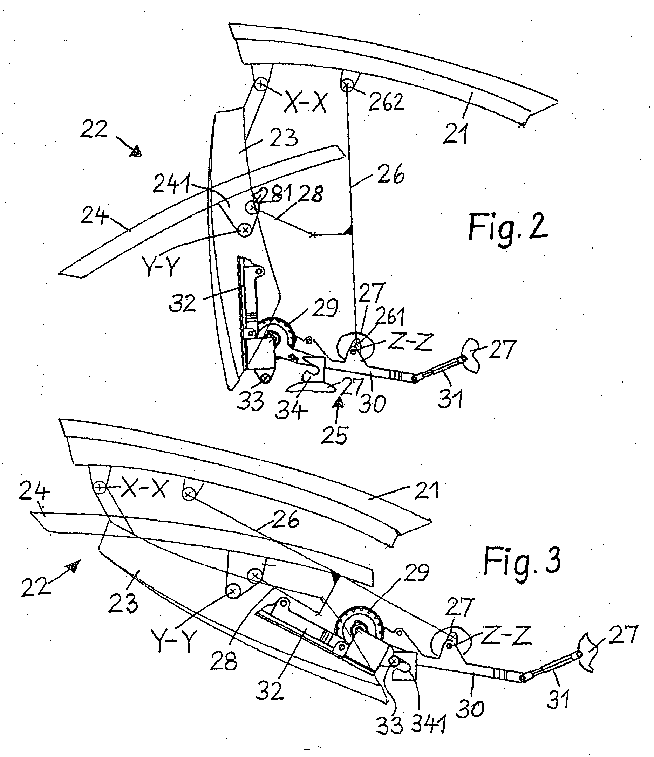

In Fig. 2 ist die Öffnung des Daches 20 zu etwa 50% vollzogen und damit die Ablageposition zu 50% erreicht. Das Teil 21 ist durch den Hauptlenker 26 weit ausgehoben, die Heckscheibe 24 ist von der C-Säule 23 gelöst, beide sind gegeneinander um die Achse Y-Y verdreht, die C-Säule 23 befindet sich ebenso wie der Hauptlenker 26 in etwa vertikaler Stellung. In dieser Position hat das Dach 20 eine Gleichgewichtslage erreicht, das Antriebsmoment ist Null. Das Dach 20 würde infolge der wirkenden Schwerkraft im Weiteren in die Ablageposition fallen, wenn nicht der Antrieb 25 in Form der Bauteile Motor 29, Zwischenlager 30 und Feder 31 durch eine abbremsende Kraft (negatives Drehmoment) dies verhindern würde.
In Fig. 3 ist eine sog. Beladehilfsposition gezeigt. Das Dachteil 21 hat seinen maximalen Aushub überschritten und wird, vom Fahrzeug aus gesehen, nach hinten abgesenkt. Der Bewegungsablauf zur Ablageposition ist zu ca. 90% vollzogen. Die C-Säule 23 ist gegenüber der Heckscheibe 24 um nahezu 180° verdreht. Der an der C-Säule 23 befestigte Führungsbolzen 33 erreicht den Eingang zur Kulisse 341. Zur Weiterbewegung muss die Druckkraft der Feder 31 am Zwischenlager 30 überwunden werden. Der Antrieb 25 beginnt also die Feder 31 am Zwischenlager 30 zu spannen. Simultan mit der Kinematik der Dachteile 21, 23, 24 bewegt sich das Zwischenlager 30 in die Ablageposition, indem es mit dem Schwenkmotor 29 infolge des Zusammenwirkens von Führungsbolzen 33 und kulissenartigem Anschlag 34 um die Achse Z-Z geschwenkt wird. Dabei verringert sich mit fortlaufender Bewegung das Gegendrehmoment der Feder 31 am Zwischenlager 30 wegen der Annäherung an die Totpunktlage.
In Fig. 4 haben die Dachteile 21, 23, 24 mit dem Gegenmoment der Feder 31 eine Gleichgewichtslage erreicht, das Antriebsmoment ist Null. Das Dach 21, 22 würde im weiteren Verlauf der Kinematik in die Ablageposition fallen, wenn es nicht durch den Antrieb 25 gebremst werden würde, der noch ein negatives Drehmoment ausübt.
In Fig. 5 hat das Dach 21, 22 die Ablageposition erreicht, in der die einzelnen Teile 21, 23, 24 des Daches kompakt abgelegt sind. Der Führungsbolzen 33 ist bis zum Ende der Kulisse 34'in den steuernden Anschlag 34 eingeführt. Die geometrische Achse U-U der Feder 31 bzw, ihre Verlängerung und die Drehachse Z-Z sind nicht mehr windschief zueinander, sondern schneiden sich in einem Punkt. Dabei hat die Hinterkante 23' der C-Säule 23 eine Bewegungsbahn 35 beschrieben. Der Schwenkmotor 29 wird abgeschaltet und damit der Antrieb 25 drucklos, die Feder 31 am Zwischenlager 30 kann wegen der exakt erreichten Totpunktlage das Dach 21, 22 nicht nach oben drücken.
Um das Dach 21, 22 aus der nunmehr erreichten Ablageposition der Fig. 5 wieder in die Schließstellung der Fig. 1 zu bringen, laufen die dargestellten Bewegungen in umgekehrter Reihenfolge ab.

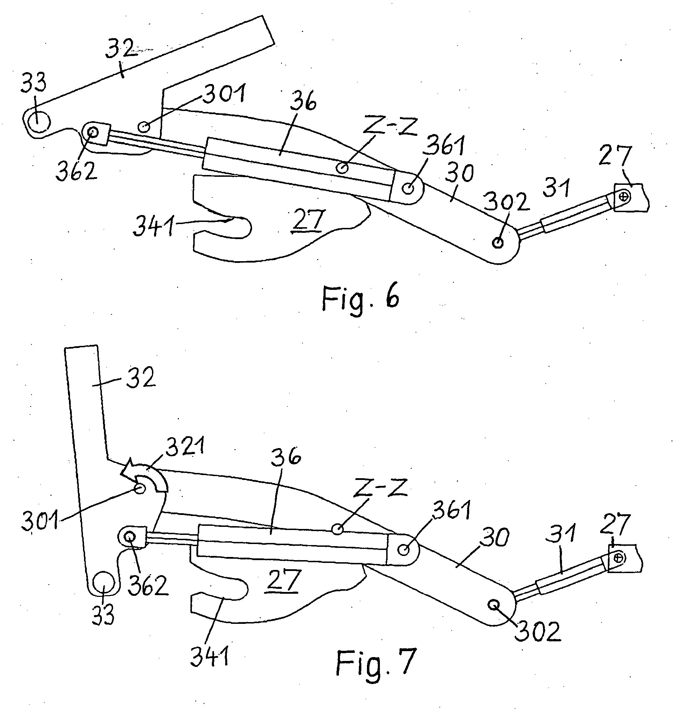

In den folgenden Figuren 6 bis 15 sind der prinzipielle Aufbau und der Bewegungsablauf zweier weiterer Ausführungsbeispiele dargestellt, die mit unterschiedlich angebrachten Zylinderantrieben ausgestattet sind. Dabei sind der Einfachheit und Übersichtlichkeit halber die Dachteile weggelassen und die Darstellungen vergrößert vorgenommen.

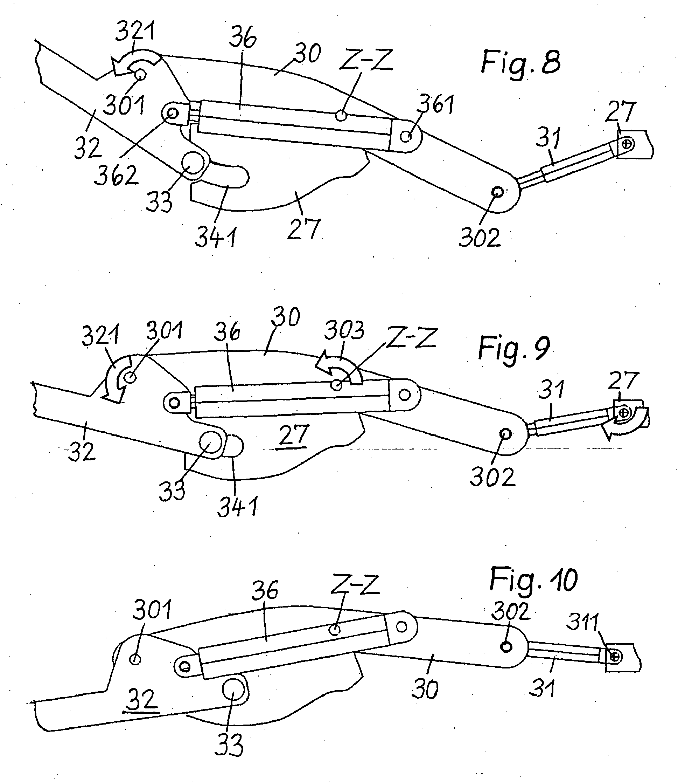

In den Figuren 6 bis 10 ist an einem Hauptlager 27 wieder ein Zwischenlager 30 um eine zur Zeichenebene rechtwinklig angeordnete Achse Z-Z parallel zur Zeichenebene schwenkbar gelagert. Einerseits der Achse Z-Z ist an das doppelhebelförmige Zwischenlager 30 eine an der Karosserie 27 schwenkbar befestigte Feder 31 in einem Punkt 302 angelenkt, und andererseits der Schwenkachse Z-Z ist in einem Punkt 301 am Zwischenlager 30 ein Arm 32 parallel zum Zwischenlager 30 drehbar gelagert, an dem die C-Säule (nicht dargestellt) starr befestigt ist. Ein Antriebszylinder 36 ist mit einem Ende 361 am Zwischenlager (Doppelhebel) 30 zwischen der Achse Z-Z und dem Anlenkpunkt 302 der Feder 31 im Wesentlichen parallel zur Zeichenebene schwenkbar gelagert. Mit seinem ausziehbaren anderen Ende 362 ist der Antriebszylinder 36 mit dem Arm 32 außerhalb des Drehpunktes 301 gelenkig verbunden. Am Ende des Arms 32 befindet sich wieder ein Führungsbolzen 33, der in nachfolgenden Bewegungspositionen mit einer steuernden Kulisse 341 zusammenwirkt.
Im Folgenden ist der Bewegungsablauf mit Hilfe der erfindungsgemäßen Anordnung und der zwischen den bewegten Dachteilen unverändert bestehenden kinematischen Beziehungen analog zu den Figuren 1 - 5 beschrieben. Demzufolge ist in Fig. 6 die Anordnung für die Schließposition des nicht dargestellten Daches erkennbar. In dieser Position wird der Antriebszylinder 36 eingeschaltet, seine Antriebskraft wirkt maximal und beginnt das Dach zu öffnen. In Fig. 7 ist die Anordnung nach ca. 50% der Bewegung dargestellt. Der Arm 32 wird aufgerichtet (durch einen Pfeil 321 angedeutet) und erreicht eine Gleichgewichtslage, in der die Antriebskraft zu Null wird und der Antrieb durch eine (negative) Haltekraft den Arm 32 und damit das Dach in dieser Stellung hält. Dabei wird der Antriebszylinder 36 um seinen Drehpunkt 361 am Zwischenlager 30 nach unten, in Richtung Kulisse 341 geschwenkt, ohne dass dabei die Stellung des Zwischenlagers 30 verändert wird. Beim weiteren Wirken des Antriebszylinders 36 wird der Arm 32 um seinen Drehpunkt 301 in Richtung des Pfeiles 321 weiterhin so verschwenkt, dass sich der Bolzen 33 zum Eingang der Kulisse 341 bewegt, wie dies Fig. 8 erkennen lässt. 90% des Bewegungsablaufs sind damit vollzogen. Im weiteren Verlauf der sich kontinuierlich vollziehenden vom Antriebszylinder 36 initiierten Dachbewegung gleitet der Bolzen 33 in der Kulisse 341, wie Fig. 9 entnehmbar, zu deren rechten Ende hin. Dadurch wird das Zwischenlager 30 um die karosseriefeste Achse Z-Z in Richtung eines Pfeiles 303 geschwenkt und die an das Zwischenlager 30 im Punkt 302 angelenkte Feder 31 gespannt, so dass im Verlauf der Bewegungen deren durch Annäherung an die Totpunktlage sich verringerndes Gegendrehmoment zu überwinden ist. Dabei ergibt sich wiederum eine Gleichgewichtslage, jenseits welcher der Antriebszylinder 36 durch seine Gegenkraft ein freies Fallen des Arms 32 und damit des nicht dargestellten Daches in die Ablageposition verhindert. In Fig. 10 ist die Ablageposition erreicht; der Bewegungsablauf ist zu 100% vollzogen. Der Führungsbolzen 33 ist am Anschlagende der Kulisse 341 angekommen, wobei der Arm 32 die Kulisse verdeckt. Die Anlenkpunkte 311, 302 und die Achse Z-Z liegen in einer zur Zeichenebene rechtwinkligen Ebene, bzw. ihre Projektionen in die Zeichenebene auf einer Geraden. Der Antriebszylinder 36 und somit der gesamte Antrieb kann drucklos geschaltet werden, weil sich die maximal zusammengedrückte Feder 31 in der Totpunktlage befindet, aus der sie ohne die Tätigkeit des Antriebszylinders 36 nicht heraus kommt. Im Übrigen gilt das zu den Figuren 1 - 5 Gesagte zumindest sinngemäß.

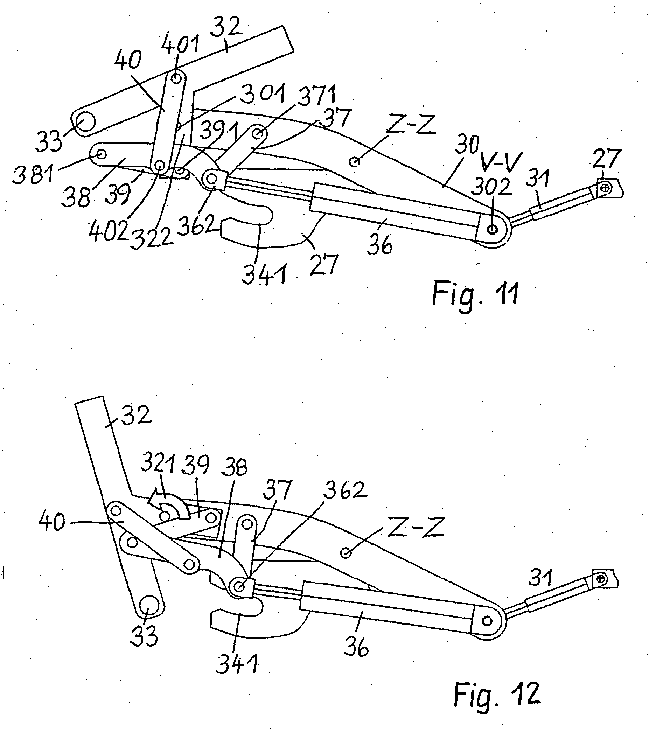

In den Figuren 11 bis 15 sind wieder ein an einer Karosserie 27 um eine Achse Z-Z parallel zur Zeichenebene schwenkbares Zwischenlager 30 sowie eine mit der Karosserie 27 starr verbundene Kulisse 341 und eine an der Karosserie 27 parallel zur Zeichenebene schwenkbar gelagerte Feder 31 dargestellt. Durch den Anlenkpunkt 302 der Feder 31 an das Zwischenlager 30 verläuft eine zur Zeichenebene rechtwinklig gerichtete Schwenkachse V-V für einen Antriebszylinder 36, der in einer zur Zeichenebene parallelen Ebene schwenkbar ist. Dem Anlenkpunkt 302 bezüglich der Drehachse Z-Z gegenüberliegend befindet sich auf dem Zwischenlager 30 ein Anlenkpunkt 301 für einen mit der nicht dargestellten C-Säule verbundenen Arm 32, der mit einem Führungsbolzen 33 versehen ist.
Außerdem ist in der Nähe des Anlenkpunktes 301 ein aus Lenkern 37, 38, 39, 40 bestehendes, an sich bekanntes Vorgelege angeordnet, dessen Lenker sämtlich in zur Zeichenebene parallelen Ebenen schwenkbar sind. Der Lenker 37 ist einerseits am Zwischenlager 30 zwischen dem Anlenkpunkt 301 und der Achse Z-Z in einem Punkt 371 gelagert und andererseits an das Antriebszylinderende 362 angelenkt. Am letztgenannten Anlenkpunkt 362 ist auch der gekröpfte Lenker 38 mit einem Ende angelenkt, der mit seinem anderen Ende mit dem Lenker 39 in einem Punkt 381 gelenkig verbunden ist. Am anderen Ende ist der Lenker 39 an eine Lasche 322 am Arm 32 in einem Punkt 391 angelenkt, an der sich auch der Drehpunkt 301 zum Zwischenlager 30 befindet. Schließlich ist der Lenker 40 einerseits mit dem Arm 32 und andererseits mit dem Lenker 38 gelenkig verbunden, wobei der Gelenkpunkt 401 des Lenkers 40 am Arm 32 mit den Punkten 391 und 301 zumindest angenähert auf einer Geraden liegt. Die Anbindung des Lenkers 40 an den Lenker 38 erfolgt etwa mittig in einem Punkt 402, der sich mit den Punkten 362 und 381 im Wesentlichen auf einer Geraden befindet.

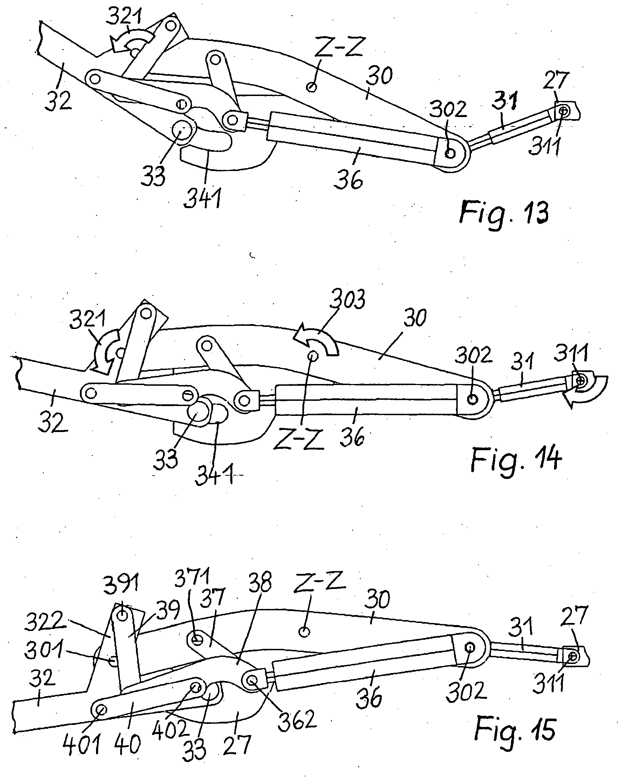

In Fig. 11 ist die die beweglichen Dachteile (Fig. 1) antreibende und steuernde Getriebeanordnung in der Schließposition dargestellt. Die Bewegung wird durch Einschalten des Antriebszylinders 36 in Richtung Ablageposition gestartet, es wirkt eine maximale Antriebskraft. In Fig. 12 hat der Antriebszylinder 36 den Drehpunkt 362 zu etwa 50% zu sich herangezogen und damit über die Vorgelegelenker 37 bis 40 den Arm 32 mit der nicht dargestellten C-Säule in Richtung eines Pfeiles 321 aufgerichtet. Die beweglichen Dachteile erreichen eine Gleichgewichtslage, in der die Antriebskraft Null ist. Nach dieser Gleichgewichtslage würden die Dachteile in die Ablageposition fallen, wenn sie nicht durch eine negative, haltende Kraft des Antriebszylinders 36 gebremst würden, die von diesem Zeitpunkt an wirkt. Fig. 13 zeigt denjenigen Zeitpunkt (bei 90%) im Bewegungsablauf der Antriebsanordnung, in dem der Führungsbolzen 33 durch Schwenken des Arms 32 in der durch einen Pfeils 321 angedeuteten Richtung den Eingang zur Kulisse 341 erreicht. Von da an muss die spannende Kraft der am Anlenkpunkt 302 des Zwischenlagers 30 angreifenden Feder 31 überwunden werden. Das Zwischenlager 30 beginnt sich in Richtung eines Pfeiles 303 (Fig. 14) zu schwenken. Im Verlauf dieser Schwenkung verringert sich das Gegenmoment der Feder 31 am Zwischenlager 30 durch Annäherung an die Totpunktlage, in der die Punkte 311 und 302 sowie die Projektion der Achse Z-Z in die Zeichenebene auf einer Geraden liegen. In Fig. 14 erreichen die Dachteile mit dem Gegenmoment der Feder 31 eine Gleichgewichtslage, die Antriebskraft wird Null. Die Antriebsanordnung wirkt einer Fallbewegung der Dachteile entgegen. In Fig. 15 ist die Ablageposition erreicht. Der Antriebszylinder 36 kann abgeschaltet werden, ohne dass die Feder 31 das Zwischenlager 30 bewegen kann, weil sich beide in der Totpunktlage befinden. Zusammenfassend ist zu sagen, dass die durch den Antriebszylinder 36 erzeugte Schwenkung des Lenkers 37 von ca. 90° durch das Vorgelege mit den Lenkern 38, 39, 40 in eine Schwenkung des Arms 32 um den Punkt 301 von ca. 150° in die Ablageposition übersetzt wird.

In Fig. 16 sind in einem Diagramm die Drehmomente M bzw. die Kräfte F über der Zeit t aufgetragen. Daraus ist ersichtlich, dass in Übereinstimmung mit den Ausführungen zu den Figuren 1 bis 15 beim Starten der Bewegung, im Zeitpunkt a das Drehmoment/ die Kraft am größten ist und bis zum Zeitpunkt b, bei 50% des Bewegungsablaufs, zu Null wird. Danach bildet sich bis zum Zeitpunkt c, bei 90% des Bewegungsablaufs ein Gegenmoment, eine Haltekraft aus. Durch das Hinzukommen der kraftelastischen Verbindung bildet sich zum Zeitpunkt c erneut ein positives Moment/ eine positive Kraft aus, die kleiner sind als zu Beginn des Bewegungsablaufs. Infolge der Annäherung an die Totpunktlage werden diese im Zeitpunkt d zu Null und treten bis zum Abschalten des Antriebs in der Totpunktlage im Zeitpunkt e nach 100% Bewegungsablauf nur noch als Haltemoment bzw. Haltekraft in Erscheinung.

### Bezugszeichenliste

- 20: Cabrio-Verdeck
- 21: vorderes Teil
- 22: hinteres Teil
- 23: C-Säule
- 24: Heckscheibe
- 25: erfindungsgemäße Anordnung (Antrieb)
- 26: Hauptlenker
- 27: Karosserie (Hauptlager)
- 28: Steuerlenker
- 29: Schwenkmotor
- 30: Zwischenlager
- 31: Kraftelastisches Verbindungsstück (Feder)
- 32: Arm
- 33: Führungsbolzen
- 34: steuernder Anschlag (Fangmaul)
- 35: Bewegungsbahn
- 36: Antriebszylinder
- 37, 38, 39, 40: Vorgelegelenker
- 231: Hinterkante
- 241: Lasche
- 261, 261, 302, 311: Anlenkpunkte
- 263: Ausleger
- 281, 301: Punkte
- 303, 321: Pfeile
- 361, 362: Doppelhebelenden, Drehpunkte
- 381,391,401,402: Gelenkpunkte
- V-V: geometrische Achse
- X-X, Y-Y, Z-Z, U-U: Dreh-, Schwenkachsen
- a, b, c, d, e: Zeitpunkte

## Patentansprüche

1. Anordnung zum Schwenken der Teile eines Fahrzeugverdecks, das aus mindestens zwei kinematisch miteinander verbundenen Teilen besteht, zwischen einer Schließposition und einer Ablageposition, aus einem an der Karosserie (27) des Fahrzeugs schwenkbar gelagerten Zwischenlager (30), und aus einem auf dem Zwischenlager (30) vorgesehenen Antriebsmittel (29, 36) für das Schwenken der Teile des Fahrzeugverdecks (20), **gekennzeichnet durch** ein das Zwischenlager, das einerseits über ein kraftelastisches Verbindungsstück (31) an der Karosserie (27) und andererseits an eines der schwenkbaren Teile (23) des Fahrzeugverdecks angelenkt ist, und einen karosseriefesten Steueranschlag (34, 34') für einen Anschlagskörper (33), der an dem schwenkbaren Teil (23) des Fahrzeugverdecks befestigt ist, das an das Zwischenlager (30) angelenkt ist.

2. Anordnung gemäß Anspruch 1, **dadurch gekennzeichnet, dass** das Zwischenlager (30) als zweiarmiger Hebel-gestaltet ist.

3. Anordnung gemäß Anspruch 1, **dadurch gekennzeichnet, dass** das Antriebsmittel ein Schwenkmotor (29) ist.

4. Anordnung gemäß Anspruch 3, **dadurch gekennzeichnet, dass** das drehbare Teil des Schwenkmotors (29) mit demjenigen schwenkbaren Teil (23) des Fahrzeugverdecks (20) verbunden ist, das an das schwenkbare Zwischenlager (30) angelenkt ist.

5. Anordnung gemäß Anspruch 1, **dadurch gekennzeichnet, dass** das Antriebsmittel ein Antriebszylinder (36) ist.

6. Anordnung gemäß Anspruch 5, **dadurch gekennzeichnet, dass** der Antriebszylinder (36) einerseits am Zwischenlager (30) zwischen dem karosseriefestem Schwenklager (Z-Z) des Zwischenlagers (30) und dem Anlenkpunkt (302) des kraftelastischen Verbindungsstücks (31) am Zwischenlager (30) schwenkbar befestigt ist und andererseits mit demjenigen schwenkbaren Teil (23) des Fahrzeugverdecks (20) verbunden ist, das an das Zwischenlager (30) angelenkt ist, und zwar zwischen der Anlenkstelle (301) und dem Anschlagskörper (33).

7. Anordnung gemäß Anspruch 5, **dadurch gekennzeichnet, dass** der Antriebszylinder (36) einerseits an der Anlenkstelle des kraftelastischen Verbindungsstücks (31) am Zwischenlager (30) befestigt und andererseits über Vorgelegelenker (37, 38, 39, 40) mit demjenigen schwenkbaren Teil (23) des Fahrzeugverdecks (20) verbunden ist, das an das Zwischenlager (30) angelenkt ist.

8. Anordnung gemäß Anspruch 7, **dadurch gekennzeichnet, dass** die Verbindungsstelle (362) des Antriebszylinders (36) zum schwenkbaren Teil (23) des Fahrzeugverdecks (20) in der Nähe seiner Anlenkung (301) am Zwischenlager (30) angeordnet ist.

9. Anordnung gemäß Anspruch 1, **dadurch gekennzeichnet, dass** das kraftelastische Verbindungsstück (31) als Druckfeder gestaltet ist.

10. Anordnung gemäß Anspruch 5, **dadurch gekennzeichnet, dass** der Antriebszylinder (36) einerseits am Zwischenlager (30) befestigt ist und andererseits über Vorgelegelenker (37, 38, 39, 40) mit demjenigen schwenkbaren Teil (23) des Fahrzeugverdecks (20) verbunden ist, das an das Zwischenlager (30) angelenkt ist.

## Claims

1. Arrangement for the rotation of a part of a vehicle roof which consists at least of two cinematically connected parts, between a locked position and a rest position, of an intermediate bearing (30) which is pivoted at the body (27) of the vehicle, and of a drive unit (29, 36) which is provided at the intermediate bearing (30) for rotating the parts of the vehicle roof (20), wherein said device is **characterized by** the intermediate bearing (30) that is coupled to the body (27) via a flexibly actuated connection element (31) at one side and connected to one of the rotatable parts (23) of the vehicle roof at its other side, and a body-mounted control stop (34, 34') for a stop element (33) that is fixed at the rotatable part (23) of the vehicle roof which is coupled to the intermediate bearing (30).

2. Arrangement according to claim 1, wherein the intermediate bearing (30) is designed as a two-armed lever.

3. Arrangement according to claim 1, wherein the drive unit is a swivel motor (29).

4. Arrangement according to claim 3, wherein the rotatable part of the swivel motor (29) is connected with the rotatable part (23) of the vehicle roof (20) that is coupled to the rotatable intermediate bearing (30).

5. Arrangement according to claim 1, wherein the drive unit is a drive cylinder (36).

6. Arrangement according to claim 5, wherein at one end the drive cylinder (36) is rotatably mounted at the intermediate bearing (30) between the body-mounted swivel bearing (Z-Z) of the intermediate bearing (30) and the coupling point (302) of the flexibly actuated connection element (31) at the intermediate bearing (30) and at its other end it is connected with the rotatable part (23) of the vehicle roof (20) that is coupled to the intermediate bearing (30), and said coupling is provided between the coupling point (301) and the stop element (33).

7. Arrangement according to claim 5, wherein the drive cylinder (36) is fixed to the coupling point of the flexibly actuated connection element (31) at the intermediate bearing (30) at one side and at the other side it is coupled via intermediate gear rods (37, 38, 39, 40) to the rotatable part (23) of the vehicle roof (20) which is coupled to the intermediate bearing (30).

8. Arrangement according to claim 7, wherein the connection point (362) of the drive cylinder (36) to the rotatable part (23) of the vehicle roof (20) is arranged near the coupling point (301) of the drive cylinder (36) at the intermediate bearing (30).

9. Arrangement according to claim 1, wherein the flexibly actuated connection element (31) is designed as a compression spring.

10. Arrangement according to claim 5, wherein the drive cylinder (36) is fixed to the intermediate bearing (30) at one side and at its other side it is connected via intermediate gear rods (37, 38, 39, 40) to the rotatable part (23) of the vehicle roof (20) which is coupled to the intermediate bearing (30).

## Revendications

1. Dispositif pour le pivotement des parties d'un toit de véhicule, qui se compose au moins de deux parties étant reliées cinématiquement, entre une position de fermeture et une position de dépose, d'un palier intermédiaire (30) monté sur la carrosserie (27) du véhicule de manière à pouvoir pivoter et d'un moyen d'entraînement (29, 36) prévu sur le palier intermédiaire (30) pour le pivotement des parties du toit de véhicule (20), est **caractérisé en ce qu'**il comprend le palier intermédiaire (30), qui est d'une part articulé par une pièce de raccord (31) flexiblement commandée à la carrosserie (27) et - d'autre part - articulé à une des parties pivotantes (23) du toit de véhicule, et une butée de commande (34, 34') fixée rigidement à la carrosserie pour un corps de butée (33), qui est monté sur la partie pivotante (23) du toit de véhicule articulée sur le palier intermédiaire (30).

2. Dispositif suivant la revendication 1 est **caractérisé en ce que** le palier intermédiaire (30) est formé comme levier à deux bras.

3. Dispositif suivant la revendication 1 est **caractérisé en ce que** le moyen d'entraînement est un moteur oscillant (29).

4. Dispositif suivant la revendication 3 est **caractérisé en ce que** la partie rotative du moteur oscillant (29) est liée à cette partie pivotante (23) du toit de véhicule (20) qui est articulée au palier intermédiaire pivotant (30).

5. Dispositif suivant la revendication 1 est **caractérisé en ce que** le moyen d'entraînement est un vérin d'entraînement (36).

6. Dispositif suivant la revendication 5 est **caractérisé en ce que** le vérin d'entraînement (36) est d'une part fixé de manière à pouvoir pivoter au palier intermédiaire (30) entre le palier pivotant fixé rigidement à la carrosserie (Z-Z) du palier intermédiaire (30) et le point d'articulation (302) de la pièce de raccord (31) flexiblement commandée sur le palier intermédiaire (30) et, d'autre part, lié à cette partie pivotante (23) du toit de véhicule (20) qui est articulée au palier intermédiaire (30), et l'articulation dénommée est prévue entre le point d'articulation (301) et le corps de butée (33).

7. Dispositif suivant la revendication 5 est **caractérisé en ce que** le vérin d'entraînement (36) est d'une part fixé au point d'articulation de la pièce de raccord (31) flexiblement commandée sur le palier intermédiaire (30) et, d'autre part, lié - par l'intermédiaire des biellettes de renvoi (37, 38, 39, 40) - à cette partie pivotante (23) du toit de véhicule (20) qui est articulée au palier intermédiaire (30).

8. Dispositif suivant la revendication 7 est **caractérisé en ce que** le point de raccord (362) du vérin d'entraînement (36) à la partie pivotante (23) du toit de véhicule (20) est placé près de son articulation (301) sur le palier intermédiaire (30).

9. Dispositif suivant la revendication 1 est **caractérisé en ce que** la pièce de raccord (31) flexiblement commandée est formée comme ressort de pression.

10. Dispositif suivant la revendication 5 est **caractérisé en ce que** le vérin d'entraînement (36) est d'une part fixé au palier intermédiaire (30) et, d'autre part, lié - par l'intermédiaire des biellettes de renvoi (37, 38, 39, 40) - à cette partie pivotante (23) du toit de véhicule (20) qui est articulée au palier intermédiaire (30).
